# EUROPEAN PATENT APPLICATION

(11) **EP 1 340 698 A1**
(43) Date of publication of application: **03.09.2003**
(21) Application number: 02425103.5
(22) Date of filing: 27.02.2002
(51) Int. Cl.: B65G 21/20, B65G 39/12

(54) **Guide for conveyor of articles**

(71) Applicant: Rexnord Marbett S.p.A., 42015 Correggio (Reggio Emilia) (IT)
(72) Inventor: Coen, Daniele, 42100 Reggio Emilia (IT)
(74) Representative: Maccalli, Marco

(57) **Abstract**

A guide for a conveyor of articles, having at least one operative face defined by a respective plurality of rollers (103), comprises at least one roller-carrying rack (101) carrying an alignment of said rollers. The rack includes an alignment of roller-carrying axles extended between a first base and a second base of the rack, each roller-carrying axle being adapted to rotatably sustaining a respective roller. The guide includes a rack-holder element (105) comprising at least one housing (107a,107b), open on the side of said operative face of the guide, for the at least one roller-carrying rack.

## Description

The present invention relates in general to the field of conveyors of articles, such as belt conveyors, chain conveyors and pneumatic conveyors, for instance of the type employed for transporting plastic bottles. The invention relates more particularly to a guide for the containment and the routing of the transported articles, of the type having at least one operative surface defined by a plurality of rollers.

In conveyors of articles it is known the use of guides that assure the correct routing of the transported articles. Guides are in particular necessary in correspondence of curved sections and bifurcations of the transport line, for instance in correspondence of accumulation stations.

It is also known the use of roller guides, i.e. guides whose operative surface is constituted by a plurality of rollers, normally idle, with parallel axes. These guides are preferred to guides constituted by bars or tubular elements, since they allow to avoid damages to the surface of the guided products.

The roller guides can be single-sided, with only one operative surface, or two-sided, with two opposite operative surfaces. A single-sided guide can be employed as a lateral wall of containment of the transported articles, while a two-sided guide is typically employed as a central dividing wall in correspondence of a bifurcation of the transport path. An example of single-sided roller guide is provided in the European patent application EP 787 666, while a two-sided roller guide is described in the European patent application EP 888 985, both in the name of the present Applicant. A two-sided roller guide is also described in the European patent application EP 893 373.

The guides described in the cited documents, although satisfactory under many respects, nevertheless show some drawbacks.

In general, the known roller guides result rather complex from the constructive viewpoint, being composed of many parts.

Particularly, the single-sided and the two-sided guides described in EP 787 666 and EP 888 985, respectively, are composed of a plurality of modules hinged to each other so as to be able to adapt to curved sections of the transport path. The hinge points are potentially weak from the structural viewpoint.

The two-sided guide described in EP 893 373, in addition to being extremely complex, is further hardly usable on curved sections of the transport path, being the obtainable curvature radius limited.

Moreover, very few of the parts that compose the known guides can be exploited for realizing indifferently a single-sided guide or a two-sided guide, being components specifically realized for one or the other type of guide. This negatively affects the production costs, and burdens the inventory management of the conveyor manufacturer.

In view of the state of the art outlined, it has been an object of the present invention to provide a roller guide constructively simple, easy to assemble and to install and whose component parts can as much as possible be used for realizing both single-sided and two-sided guides.

According to the present invention, such an object has been attained thanks to a guide as defined in claim 1.

Briefly stated, the guide according to the present invention has at least one operative face defined by a respective plurality of rollers, and comprises at least one roller-carrying rack carrying an alignment of rollers. The rack includes an alignment of roller-carrying axles extended between a first base and a second base of the rack, each roller-carrying axle being adapted to rotatably sustaining one or more respective rollers.

A rack-holder element is provided comprising a housing for the at least one roller-carrying rack, open on the side of said operative surface.

The features and advantages of the present invention will be made evident by the following detailed description of some embodiments thereof, provided merely by way of nonlimiting examples and illustrated in the attached drawings, wherein:
FIG. **1** is a partially exploded axonometric view of a guide for conveyor of articles according to a first embodiment of the present invention;
FIG. **2** is an exploded axonometric view of a roller-carrying rack of the guide of FIG. **1**;
FIG. **3** is a sectional view along a median longitudinal plane of the roller-carrying rack of FIG. **2**;
FIG. **4** is a top-plan view of the roller-carrying rack of FIG. **2**;
FIG. **5** is a sectional view along a transversal plane of the transport guide of FIG. **1**;
FIG. **6** is a perspective view of the transport guide of FIG. **1**, adapted to the installation in correspondence of a curved section of a transport path of articles;
FIG. **7** is a view similar to that of FIG. **5** of a guide according to a second embodiment of the present invention;
FIG. **8** is a view similar to those of FIG. **5** and FIG. **7** of a guide according to a third embodiment of the present invention;
FIG. **9** is a sectional view similar to those of FIG. **5**, FIG. **7** and FIG. **8** of a guide according to a fourth embodiment of the present invention, and
FIG. **10** is a view similar to that of FIG. **3** of a roller-carrying rack according to another embodiment of the present invention.

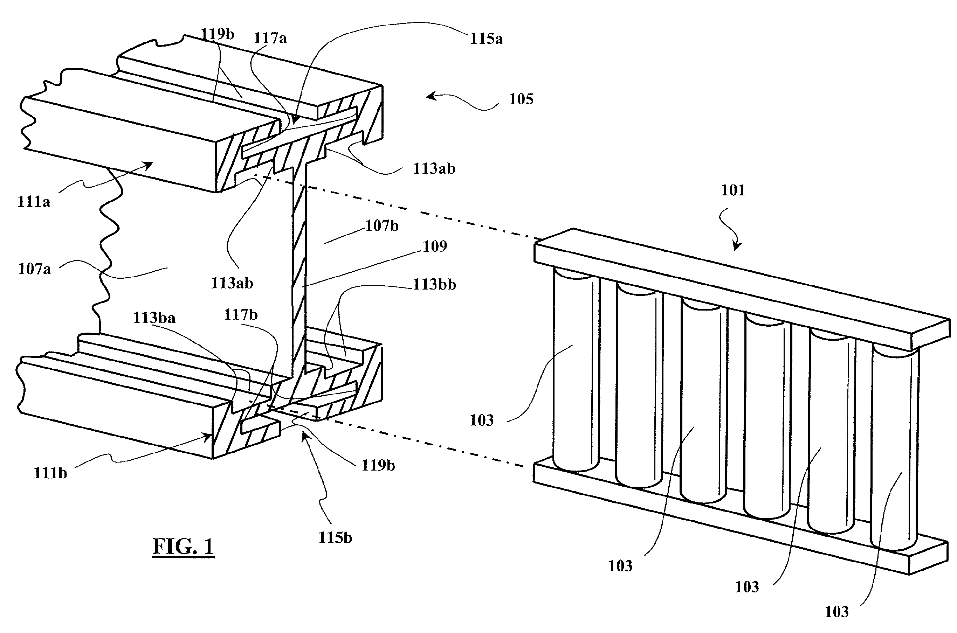

With reference to the drawings, in which identical or similar parts in the different embodiments are identified by the same alphanumeric references, in FIG. **1** there is shown in axonometry and partially exploded a guide for conveyor of articles according to a first embodiment of the present invention, particularly a single-sided guide, adapted for instance to act as a side wall of containment of articles transported along a transport line. The guide of FIG. **1** includes a roller-carrying rack **101**, carrying an array of idle rollers **103** and a rack-holder element **105**.

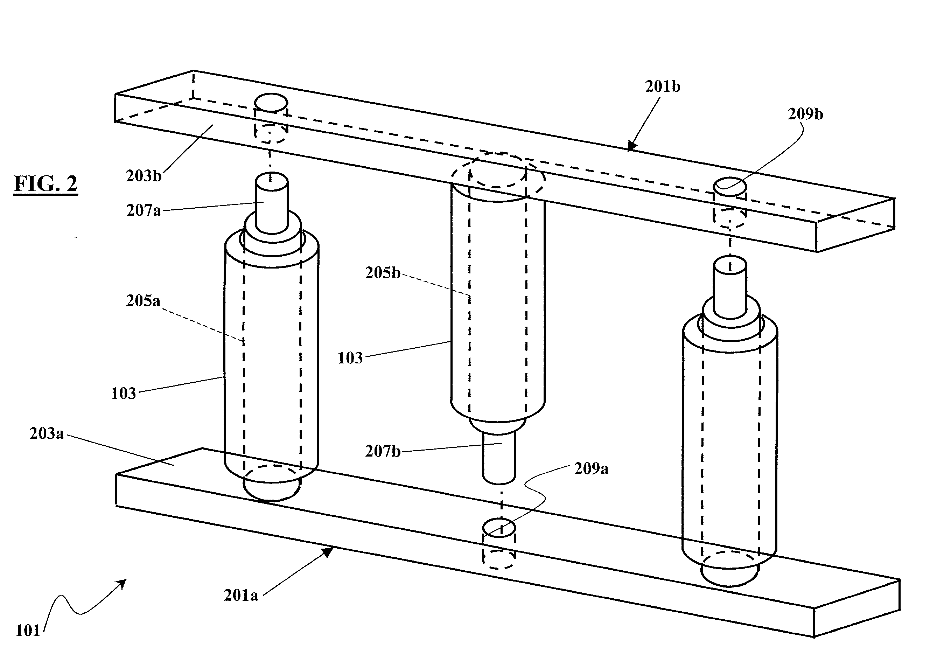

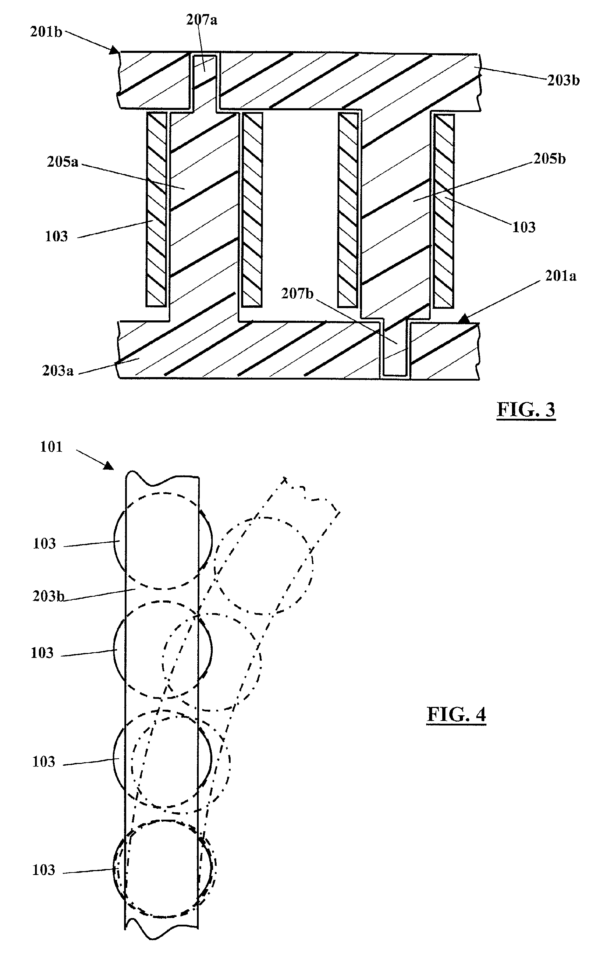

As visible in FIG. **2** and in **FIG. 3,** the roller-carrying rack **101** includes a pair of roller-carrying half-racks **201a, 201b**, opposed to each other in the direction of the rotation axes of the rollers **103** and joined to each other. Each half-rack **201a, 201b** includes a bar **203a, 203b**, in the example having generically quadrangular section, extended in the direction of the array of rollers **103**. From each bar **203a**, **203b** a plurality of roller-carrying axles **205a, 205b** extends, perpendicularly to and on a same side of the bar, each one adapted to freely rotatably support a respective roller **103**.

Each axle **205a, 205b** terminates, at one free end thereof, with a tang **207a**, **207b.** In each bar **203a, 203b** a plurality of seats **209a, 209b** is formed, on the same side of the bar from which the axles **205a, 205b** extend. On each bar **203a, 203b** the axles **205a**, **205b** and the seats **209a, 209b** are arranged regularly, the pitch of the seats **209a, 209b** coinciding with the pitch of the axles **205a, 205b**; additionally, the axles and the seats are intercalated to each other. The seats **209a, 209b** provided for on the bar **203a, 203b** of a half-rack **201a, 201b** have shape and dimensions adapted to receive the tangs **207b, 207a** of the axles **205b, 205a** of the other half-rack **201b, 201a**. In the shown example, the seats **209a, 209b** are constituted by circular through-holes formed in the bars **203a, 203b**, of diameter substantially correspondent to the diameter of the tangs **207a, 207b**. The axles **205a, 205b**, of cylindrical shape, have external diameter slightly lower than the inner diameter of the rollers **103**. The rollers **103** can thus be inserted on the axles **205a, 205b** and result freely rotatable thereon.

The two half-racks **201a** and **201b** are realized in a material with flexibility properties, for instance in synthetic material, particularly acetal resin. This confers to the roller-carrying rack **101** a suitable degree of longitudinal flexibility (FIG. **4**) useful, as it will be described, to allow the realization of curved guides.

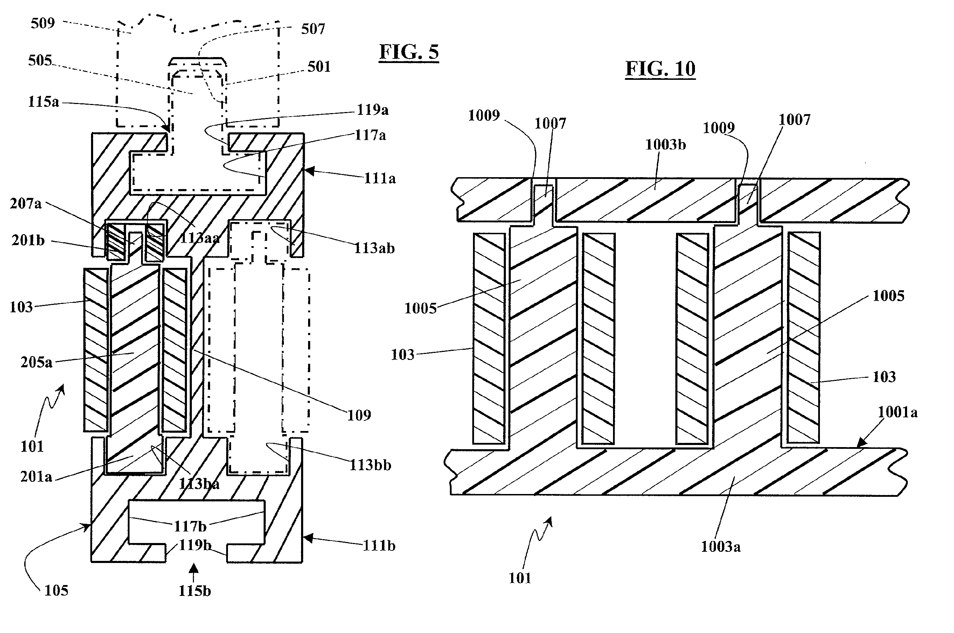

Making again reference to FIG. **1** and, jointly, to FIG. **5**, the rack-holder element **105** is constituted by a profiled bar in metallic material. Preferably, the metallic material constituting the rack-holder element **105** is chosen in such a way that the profiled bar be deformable in plastic way, for instance by calendering; a suitable material is for instance aluminum, that also has the advantage of having a low specific weight.

Although the guide shown in FIG. **1** is single-sided, the rack-holder element **105** composing it is adapted to be used indifferently for realizing both a single-sided guide and a two-sided guide. The rack-holder element **105** has a double "T"-shaped transversal section, so as to form a pair of housings **107a, 107b** extending longitudinally to the bar **105,** symmetrically with respect to a median longitudinal plane to the bar **105** in which the stem of the double "T" lies. Each housing **107a, 107b** is adapted to house one or more roller-carrying racks **101,** arranged in longitudinal succession. The two housings **107a, 107b**, each of which has a "C"-shaped transversal section and is open on the side of a respective potential operative surface of the guide that the rack-holder element is adapted to form, are separated by a wall **109.** In the upper and lower wings **111a** and **111b** of the bar **105** protruding transversally to the wall **109** from opposite sides of the median longitudinal plane two pairs of grooves **113aa, 113ba,** and **113ab, 113bb** are formed, extending longitudinally to the bar **105** and vertically superimposed, of such a width as to house, holding it by slight friction, a respective one of the two bars **201b, 201a** of a roller-carrying rack **101**.

In at least one of the two upper or lower wings **111a**, **111b** of the rack-holder bar **105** there is also formed, centrally and on the opposite side of the grooves **113aa**, **113ba** or **113ab**, **113bb**, a groove **115a**, **115b** longitudinal to the bar **105** and having substantially "T"-shaped transversal section, with a wider portion **117a, 117b** and a narrower portion **119a, 119b**. The wider portion **117a**, **117b** is adapted to house the head, preferably hexagonal or however non-circular, of a screw (schematically shown in dash-and-dot line in FIG. **5** and identified therein by **501**), while the narrower portion **119a**, **119b** is adapted to allow the passage of the stem of the screw.

Preferably, the position of the grooves **113aa, 113ab**, **113ba, 113bb** with respect to the wall **109** and the external diameter of the rollers **103** are such that, when a roller-carrying rack is accomodated in the respective housing **107a**, **107b** of the rack-holder element **105**, the distance from the wall **109** of the plane tangential to the external surface of the array of rollers **103** is greater than the extension of the wings **111a** and **111b** In this way it is guaranteed that, when the guide is installed in a conveyor of articles, the transported articles do not get into rubbing contact with static parts of the guide, but only with the idle rollers **103**.

As schematically shown in FIG. **5**, the guide can be mounted to the conveyor inserting one or more screws **501** in the at least one groove **115a, 115b** longitudinally thereto; the heads **503** of the screws **501** are inserted in the wider portion **117a, 117b** of the groove **115a**, **115b;** the narrower portion 119a, 119b of the groove **115a**, **115b** allows the passage of the stem **505** of the screws **501** and at the same time the shoulder formed between the narrower portion **119a, 119b** and the wider portion **117a, 117b** of the groove **115a, 115b** holds the heads of the screws. On the screw **501** there are screw-mounted support bars **509** provided with threaded holes **507**; for the screw-mounting, the support bars are rotated while the screws do not rotate thanks to the prismatic coupling between the hexagonal heads thereof and the wider portion **117a, 117b** of the groove. The support bars are then fixed to static parts of the conveyor, or to a system for the automatic positioning of the guides.

Other assembling methods of the guide are possible. For instance, the support bars **509** can terminate with a "T"-shaped appendix, or similar element of geometric coupling, that can be inserted into the grooves **115a** and **115b** or, viceversa, the "T"-shaped appendix can be provided on the rack-holder element **105**, adapted to be accomodated in a complementary groove formed in the support bars.

For assembling the guide, one or more roller-carrying racks **101** is firstly assembled. To such end, after having inserted the rollers **103** on the axles **205a** and **205b** of pairs of half-racks **201a** and **201b**, the half-racks **201a** and **202b** are joined together inserting the tangs **207a, 207b** of the axles **205a, 205b** of a half-rack **201a, 201b** into the holes **209b, 209a** formed in the other half-rack **201b, 201a.** Preferably, the dimensions of the holes **209a, 209b** are such that for the insertion of the tangs **207a, 207b** a slight pressure needs to be exerted, so that after having been inserted into the respective holes, the tangs are held against sliding out.

The roller-carrying racks **101** thus formed are then inserted in succession into one of the housings **107a, 107b** of the rack-holder element **105**, in case the guide to be realized is single-sided, or in both the housings **107a**, **107b**, in the case the guide to be realized is two-sided. The racks 101 are put close to a head of the rack-holder element and the two bars **203a, 203b** of the half-racks **201a, 201b** are pushed so as to slide within the selected pair of opposing grooves **113ba, 113aa** or **113bb, 113ab** of the rack-holder element **105**.

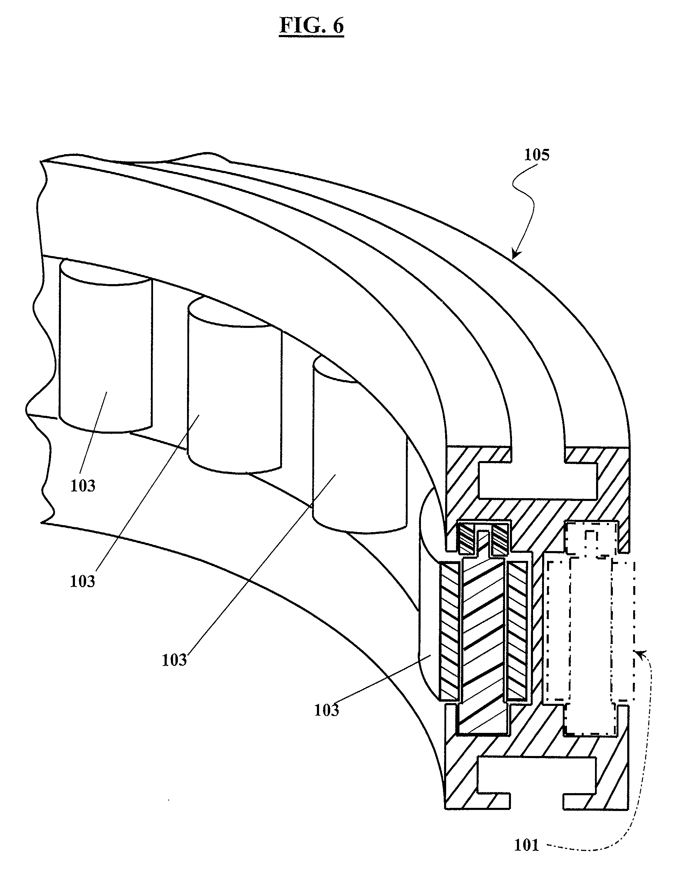

If it is desired to realize a curved guide, as shown in FIG. **6**, the rack-holder element **105** can be bent with the desired curvature radius. This can be for instance obtained through an operation of calendering, that can be carried out either before or after having inserted the racks **101** into one or in both of the housings **107a, 107b**. The flexibility of the roller-carrying racks **101** allows the latter to adapt to the shape of the rack-holder element **105**, and thus does not limit the obtainable curvature radius. The bending can affect all or only sections of the rack-holder element **105**.

It can be appreciated that the guide according to the embodiment just described is composed of only three types of parts, namely the roller-carrying half-rack, the roller and the rack-holder element. Additionally, the same components are used for realizing both rectilinear and curved guides, as well as to realize both single-sided guides (useful for instance as containment walls to be installed laterally to the transport path of the articles) and two-sided guides (for instance to be installed in correspondence of bifurcations of the transport path).

Furthermore, it is possible to realize guides of the most varied lengths, simply shearing the rack-holder element **105** to the desired length and inserting in the same housing, or in the two housings, of the rack-holder element more racks **101**, of standard length.

The reduced number of components greatly simplifies the manufacture and the management of the inventory of the components of the guide.

The assemblage of the guide is extremely simple and fast.

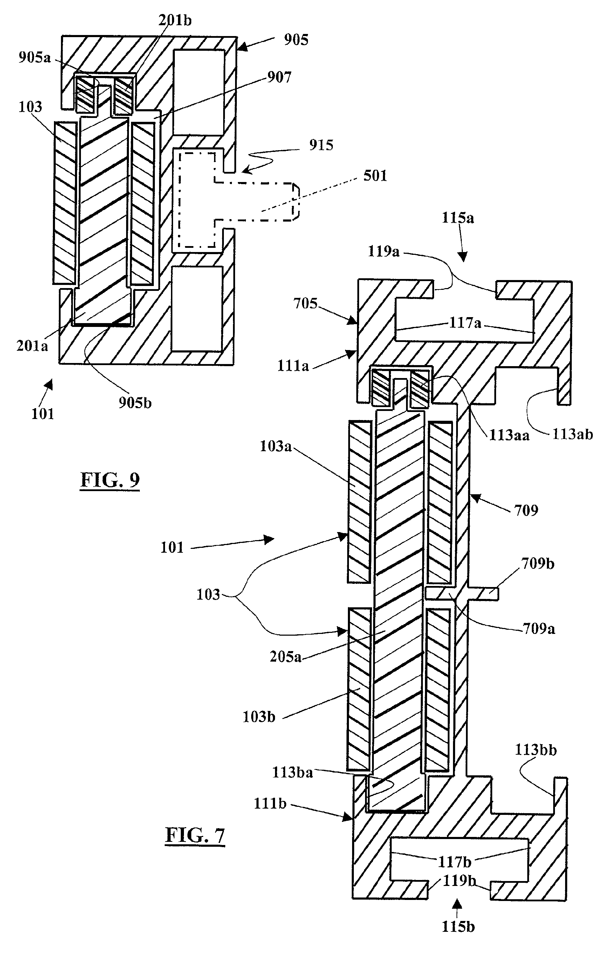

In FIG. **7** there is shown, in sectional view analogous to that of FIG. **5**, a guide according to a second embodiment of the invention. In the guide of FIG. **7** the rollers **103** carried by the roller-carrying axles **205a, 205b** comprise each a pair of rollers, respectively upper **103a** and lower **103b**, in axial succession. The rollers **103a** and **103b** have each the same extension as the rollers **103** of the first embodiment previously described; in such a case, the guide has an overall extension in the direction of the axes of the rollers approximately twice of that of the guide of the first embodiment. In alternative, each of the rollers **103a**, **103b** has for example a length equal to approximately a half that of the rollers **103** of the first embodiment described, and the guide has the same overall extension of the guide previously described. The guide includes a rack-holder element **705**, also in this case adapted to realize both a single-sided guide and a two-sided guide, having a central wall **709** from which, substantially in intermediate position between the two wings **111a** and **111b,** two shelves **709a** and **709b** protrude from opposite sides, and extend longitudinally to the rack-holder element **105** in continuous way or for discrete sections, that act as supports for the upper rollers **103a** of the roller-carrying racks.

The number of rollers carried by each axle of the racks can clearly be higher than two and the central wall of the rack-holder element can include more pairs of support shelves for the rollers. This second embodiment is therefore particularly adapted for obtaining relatively high guides, for the transport of articles of significant height, for instance bottles, or guides for conveyors with several transport planes superimposed.

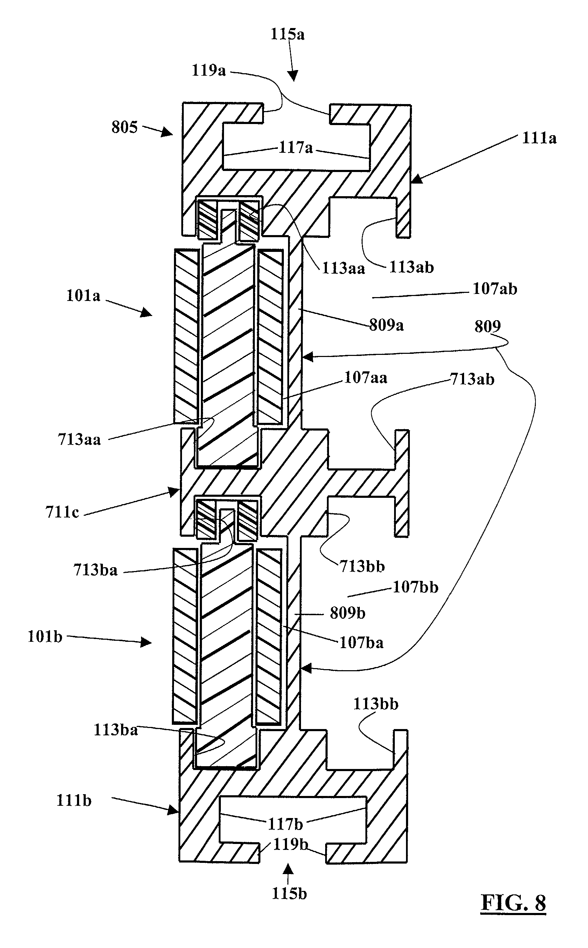

Another embodiment of the present invention suitable for obtaining single-sided or two-sided guides with several superimposed orders of rollers in correspondence of a same operative surface of the guide is shown in FIG. **8**, in a sectional view analogous to those of FIG. 5 and FIG. **7**. The guide includes a rack-holder element **805** with an intermediate wing **711c** in intermediate position between the lower wing **111a** and the upper wing **111a** and joined thereto through respective upper and lower wall portions **809a** and **809b.** In the intermediate wing **711c,** of extension equal to that of the two lower and upper wings **111a** and **111b**, two pairs of grooves **713aa, 713ab** and **713ba, 713bb** are formed, extending longitudinally to the rack-holder element **805.** The grooves **713aa** and **713ab** faces the grooves **113aa** and **113ab**, respectively, which are formed in the upper wing **111a**, the grooves **713ba** and **713bb** faces the grooves **113ba** and **113bb,** respectively, which are formed in the lower wing **111b.** In the rack-holder element **805** two pairs of vertically-superimposed housings **107aa, 107ba** and **107ab, 107bb** are thus defined, each one adapted to accomodate one or more roller-carrying racks, as for instance the two racks **101a** and **101b** shown in the drawing, housed in the respective housings **107aa, 107ba**.

As in the case of the embodiment of FIG. **7**, the rack-holder elements may comprise more intermediate wings similar to the intermediate wing **711c**, defining more than two vertically-superimposed housings on each side, *i.e.,* in correspondence of each potential operative surface of the guide.

Hybrid embodiments are also possible, in which the intermediate wing or wings extend only on one side, to form guides with plural superimposed orders of rollers only in correspondence of one operative surface of the guide.

In the embodiments described up to now, the rack-holder element of the guide is adapted to realize both a single-sided guide and a two-sided guide. FIG. **9** shows, in a sectional view analogous to those of FIG. **5**, FIG. **7** and FIG. **8**, an embodiment of the invention in which a rack-holder element **905** is provided that is adapted to exclusively realize a single-sided guide. The rack-holder element **905** has substantially "C"-shaped transversal section, and has only one housing **907** for roller-carrying racks **101**, open on the side of the single operative surface of the guide. In the back **909** of the "C" a groove **915** is formed, similar to the grooves **115a**, **115b**, adapted to receive screws **501** for fixing the rack-holder element **905** to support bars similar to the support bar **509** of FIG. **5.**

Clearly, the rack-holder element of FIG. **9** can be modified in a way similar to what shown in FIG. **7** and in FIG. **8**, so as to be able to accomodate more orders of vertically superimposed racks, and the groove **915** can house a "T"-shaped appendix of a support bar or, viceversa, the "T"-shaped appendix can be provided on the back of the rack-holder element.

The present invention has been so far described in terms of some possible embodiments thereof, provided merely by way of examples. Those skilled in the art can bring several changes to the embodiments described, as well as devise other embodiments of the present invention.

The two half-racks composing the roller-carrying rack could for instance be formed in such a way that the respective roller-carrying axles, rather than being intercalated to the seats for the tangs of the roller-carrying axles of the other half-rack, are concentrated on a half of the bar, while the seats for the tangs are formed on the other half of the bar. Or, rather than providing an alternation of a roller-carryinger axle and a seat for tang, it is possible to have groups of roller-carrying axles alternated to groups of seats for tangs.

In still another possible embodiment, shown in FIG. **10**, instead of providing two half-racks, it is possible to provide only one rack element **1001a** comprising a bar **1003a** from which as many roller-carrying axles **1005** extended as the rollers that the rack has to support. The other half-rack is replaced by a simple bar **1001b**, provided of seats **1009** for the insertion of the tangs **1007** of the roller-carrying axles **1005**. Compared to the embodiment previously described, this variation has nevertheless one component more (the bar), and it is not therefore so advantageous in terms of costs of production and inventory management.

In another variation, the roller-carrying axles may not be formed integrally to the respective bars, on the contrary be provided at both the ends of tangs that can be inserted into seats of both the bars.

The type of insertion of the tangs of the roller-carrying axles in the respective seats can be different from the one described, being for instance possible to have bayonet or dovetail joinings.

The joining of the roller-carrying racks to the rack-holder element could be of different type from the described one, and not provide for the insertion of the bars of the half-racks in grooves formed in the wings of the rack-holder element. For instance, the roller-carrying rack could be inserted frontally in the housing of the rack-holder element, and be held therein by simple friction between the bars and the wings of the rack-holder element.

Other variations can be conceived, without for this departing from the scope of the invention defined in the appended claims.

## Claims

1. A guide for a conveyor of articles, having at least one operative face defined by a respective plurality of rollers (**103**),
**characterized by** comprising
at least one roller-carrying rack (**101**) carrying an alignment of said rollers, the rack comprising an alignment of roller-carrying axles (**205a,205b;1015**) extending between a first base (**203a;1003a**) and a second base (**203b;1003b**) of the rack, each roller-carrying axle being adapted to rotatably sustaining at least one respective roller;
a rack-holder element (**105;705;805;905**) comprising at least one housing (**107a,107b;107aa,107ab,107ba,107bb;907**), open on the side of said operative face of the guide, for the at least one roller-carrying rack.

2. The guide according to claim 1, in which said at least one housing is shaped as a "C."

3. The guide according to claim 1 or 2, in which the at least one rack comprises a first half-rack (**201a**) and a second half-rack (**201b**) that can be joined to each other, each having a base constituted by the first or, respectively, the second base of the rack, from which a respective sub-set of the roller-carrying axles extends.

4. The guide according to claim 3, in which each half-rack includes a number of roller-carrying axles equal to half the roller-carrying axles of the rack.

5. The guide according to claim 4, in which the roller-carrying axles of each half-rack are arranged in such a way that, when the two half-racks are joined to each other, the roller-carrying axles of the first half-rack are intercalated to the roller-carrying axles of the second half-rack.

6. The guide according to claim 5, in which the first half-rack and the second half-rack are identical to each other.

7. The guide according to claim 1, in which the at least one rack comprises a first rack element (**1001a**) and a second rack element (**1003b**) that can be joined to each other, the first rack element having a base constituted by the first base of the rack from which the roller-carrying axles of the rack extended, the second rack element comprising the second base of the rack.

8. The guide according to any one of the claims from 1 to 7, in which each roller-carrying axle includes at least one respective tang (**207a,207b**), which can be inserted in a respective seat (**209a,209b**) provided in the first base or in the second base of the rack.

9. The guide according to claim 8, in which each roller-carrying axle is formed in a single piece with one of the first base and the second base of the rack.

10. The guide according to any one of the preceding claims, in which each roller-carrying axle carries two or more rollers (**103a,103b**) in axial succession.

11. The guide according to claim 10, in which said housing of the rack-holder element includes one or more shelves (**709a,709b**) acting as dividing elements of the two or more rollers.

12. The guide according to any one of the preceding claims, in which the rack-holder element is adapted to house, in said at least one housing, a plurality of roller-carrying racks arranged in succession.

13. The guide according to any one of the preceding claims, in which said at least one housing includes at least two housings (**107aa,107ba,107ab,107bb**) superimposed along the direction of the axles of the rollers.

14. The guide according to any one of the preceding claims, having a first and a second operative faces each one defined by a respective plurality of rollers, the rack-holder element comprising at least one first housing (**107a;107aa,107ba**) for roller-carrying racks open on the side of the first operative face, and at least one second housing (**107b;107ab,107bb**) for roller-carrying racks open on the side of the second operative face of the guide.

15. The guide according to any one of the preceding claims, in which the rack-holder element includes a pair of wings (**111a,111b;111a,111b,111c**) projecting from a wall **(109;709;809)** from the side of said at least one operative face of the guide, said wings and said wall defining the housing for the roller-carrying rack, each of said wings being adapted to cooperate with a respective one of the first and the second base of the rack to hold the rack in the housing.

16. The guide according to claim 15, in which in said pair of wings a pair of grooves (**113aa,113ba,113ab,113bb**) is formed adapted to receive by insertion the first and the second base of the roller-carrying rack.

17. The guide according to any one of the preceding claims, in which the roller-carrying rack is flexible transversally to the alignment of rollers and the rack-holder element is plastically deformable transversally to the alignment of rollers.

18. The guide according to claim 17, in which the roller-carrying rack is in synthetic material, particularly acetal resin and the rack-holder element is in plastically deformable metal, particularly aluminum.

19. The guide according to any one of the preceding claims, in which the rack-holder element includes means (**115a,115b;915**) adapted to allow the fixing (**501**) of the rack-holder element to support elements of the guide provided in the conveyor.
